# EUROPÄISCHE PATENTANMELDUNG

(11) **EP 1 304 878 A1**
(43) Veröffentlichungstag der Anmeldung: **23.04.2003**
(21) Anmeldenummer: 01124462.1
(22) Anmeldetag: 11.10.2001
(51) Int. Cl.: H04N 7/15

(54) **Verfahren zur Übertragung von Kommunikationsdaten, Video-Konferenz- und Video-Chat-System**

(71) Anmelder: SIEMENS AKTIENGESELLSCHAFT, 80333 München (DE)
(72) Erfinder: Beuse, Klaus, 12355 Berlin (DE)

(57) **Zusammenfassung**

Die Erfindung betrifft ein Verfahren zur Übertragung (3; 6; 8) von Kommunikationsdaten zwischen mindestens zwei in einem gemeinsamen Kommunikationsnetz an verschiedenen Netzpunkten angeordneten Endgeräten (1; 4; 7), wobei Bewegungsbilddaten zwischen den zwei Endgeräten (1; 4; 7) zur gleichzeitigen Kommunikation der Endgeräte (1; 4; 7) in Echtzeit paketvermittelt übertragen werden (3; 6; 8). Es wird ein Video-Konferenzsystem und ein Video-Chat-System zur Durchführung des Verfahrens gezeigt.

## Beschreibung

Die Erfindung betrifft ein Verfahren zur Übertragung von Kommunikationsdaten zwischen mindestens zwei in einem gemeinsamen Kommunikationsnetz an verschiedenen Netzpunkten angeordneten Endgeräten gemäß dem Oberbegriff des Patentanspruches 1, ein Video-Konferenzsystem gemäß dem Oberbegriff des Patentanspruches 13 und ein Video-Chat-System gemäß dem Oberbegriff des Patentanspruchs 15.

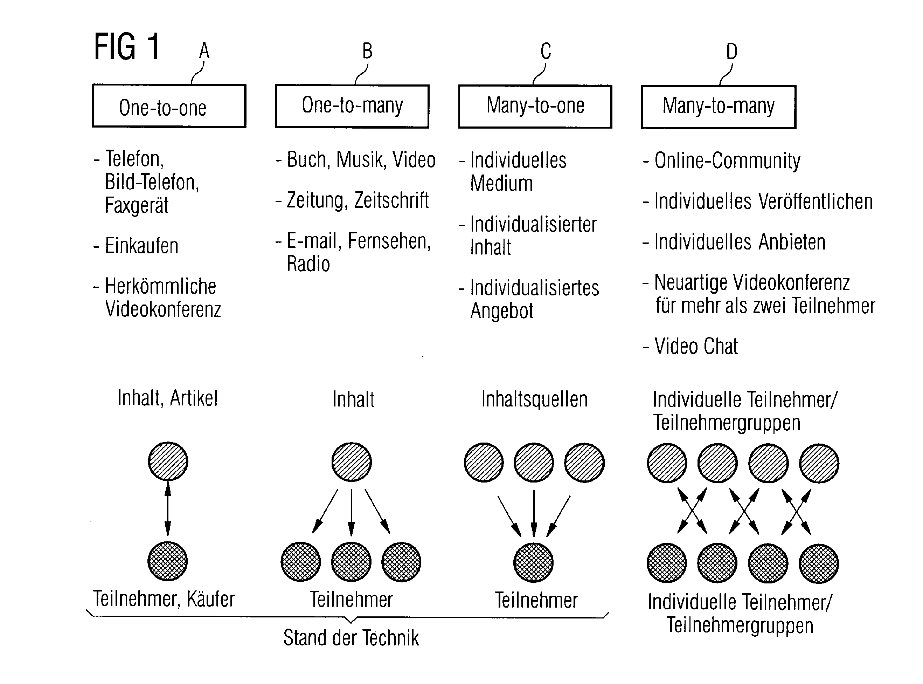

Herkömmlicherweise werden zur Sprach- und/oder Textkommunikation Kommunikationsgeräte, wie Telefon, Telefaxgeräte, PCs zum Text-Chatten via Internet und zum Versenden bzw. Empfangen von E-mails sowie Rundfunkgeräte verwendet. Für die Kommunikation mit Bildelementen gibt es das Bild-Telefon, welches über ein auf ISDN-Standard basierendes Kommunikationsnetz eine Video-Konferenz zwischen zwei Teilnehmern bzw. Teilnehmergruppen in zwei verschiedenen Netzpunkten ermöglicht, PCs, die beispielsweise mittels der Software "Microsoft Netmeeting" die Durchführung einer Video-Konferenz über auf Internet-Protokollen basierenden Kommunikationsnetzen - wie LANs und WANs - mittels dem ITU-Standard H.323 realisieren und Einrichtungen zum Senden und Empfangen von Fernsehübertragungen. Die mittels derartiger Kommunikationseinrichtungen durchgeführten Kommunikationen lassen sich in drei verschiedene Gruppen, wie sie in Fig. 1 wiedergegeben sind, einteilen.

Die erste Gruppe A betrifft die Kommunikation innerhalb eines Kommunikationsnetzes zwischen zwei in verschiedenen Netzpunkten angeordneten Endgeräten, die jeweils von Teilnehmern benutzt werden. Kommunikationsgeräte zur Durchführung einer derartigen one-to-one Kommunikation sind Telefone, Bild-Telefone, Telefaxgeräte und PCs, mittels welcher beispielsweise eine herkömmliche Video-Konferenz zwischen zwei Teilnehmern oder das Einkaufen in Internet-Shops durchgeführt wird.

Die zweite Gruppe B betrifft die sogenannten one-to-many Kommunikationsverbindungen, bei welchen von einem Teilnehmer mittels eines in einem Netzpunkt angeordneten sendenden Gerätes Text-, Bild- und/oder Toninhalte an mehrere in verschiedenen Netzpunkten angeordnete Endgeräte gesendet werden. Beispiele für one-to-many Kommunikationsverbindungen sind Fernseh- und Rundfunkübertragungen, das Versenden von E-mails an mehrere Empfänger sowie das Übertragen von Musik-, Video- und Textdaten, wie sie für das Übertragen von Musikstücken, Bildern, Zeitschriften, Zeitungen und Büchern verwendet werden. Beispielsweise können durch Zugriff auf einen gemeinsamen Server jeden Tag Textdaten, die aktuelle Nachrichten wiedergeben, als Internet-Zeitung über das Internet an eine Vielzahl von Endgeräten mit bestimmten E-mail-Adressen versendet werden.

Die dritte Gruppe C betrifft die many-to-one Kommunikationsverbindungen, d.h. ein Benutzer greift mittels seines Endgerätes auf mehrere Inhaltsquellen zur Zusammenstellung einer von ihm benötigten Inhaltskombination zu. Beispielsweise findet bei der Software "MyYahoo" ein Zugriff auf den Inhalt verschiedener Webseiten statt, um sich die Angebote verschiedener Anbieter zusammenstellen zu lassen.

Bei jeder der drei Gruppen A, B und C ist eine Übertragung von Bewegungsbilddaten als Videodaten in Echtzeit möglich. Insbesondere bei der one-to-one Kommunikationsverbindung gemäß der Gruppe A ist eine Übertragung von Bewegungsbilddaten mit hoher Qualität in Echtzeit im Rahmen einer Video-Konferenz über auf ISDN-Standard basierende Verbindungen möglich.

Zur Kommunikation über in die oben genannten Gruppen klassifizierten Kommunikationsverbindungen ist das Prinzip des Chattens bekannt, wie es herkömmlicherweise für die echtzeitnahe Texteingabe, Textübertragung und Textanzeige einer Zusammenschaltung zweier oder mehrerer in einem in der Regel auf IP (Internet-Protokollen) basierenden Kommunikationsnetz angeordnete Endgeräte verwendet wird. Entgegen dem herkömmlichen Telefonieren und der Durchführung einer Video-Konferenz per Bild-Telefon wird beim Chatten ein Text, der beispielsweise per Tastatur eingegeben und per Bildschirm ausgegeben wird, nahezu in Echtzeit übertragen. Der zu übertragende Text benötigt vorteilhafterweise geringe Übertragungsbandbreiten, ist logbar, kann z.B. in einem History File gespeichert werden, auf bestimmte Stichwörter durchsucht werden und online maschinell verarbeitet werden. Eine derartige maschinelle Weiterverarbeitung könnte die Übersetzung in eine Fremdsprache sein.

Beim Chatten, welches eine asynchrone, Realzeit-nahe Kommunikation zwischen mehreren Endgeräten darstellt, sind einerseits die Endgeräte online und somit jederzeit erreichbar, andererseits werden die Kommunikationsdaten in quasi Realzeit übertragen. Die sich aus den Kommunikationsdaten ergebende Information wird automatisch sequentialisiert, so dass ein Unterbrechen des den Text eingebenden und sendenden Teilnehmers bzw. ein "Ins-Wort-fallen" nicht möglich ist.

Das Chatten wird in der Regel durch Übertragung von Textdaten in auf IP basierenden Kommunikationsnetzen mit Hilfe eines Chat-Servers realisiert. Das Chatten kann öffentlich (Public Chat) über gemeinsame Kommunikationsnetze durchgeführt werden, bei dem der wirkliche Name eines chattenden Teilnehmers nicht verwendet wird und nicht ermittelbar ist. Der chattende Teilnehmer kann somit selber bestimmen, ob, wann und wieviel er von seiner Person - evtl. auch schrittweise - bekanntgibt. Deshalb ist Chatten als Kommunikationsform zum weltweiten Kennenlernen verschiedender Personen gut geeignet. Beim Public Chat wird das spätere Zuschalten eines beliebigen dritten Teilnehmers, der ein Zuschalten wünscht, in bereits bestehende Chatverbindungen im Gegensatz zum Private Chat ermöglicht.

Sobald zusätzlich zu den Textdaten oder anstelle der Textdaten Videodaten beim Chatten übertragen werden sollen, treten Probleme bei der benötigten Größe der Übertragungsbandbreite auf, die mindestens 128 kbit/s zur Übertragung von Bilddaten betragen müssen. Insbesondere für die Übertragung von Bewegungsbilddaten über Internet oder Intranet mittels Multimedia-PCs werden große Bandbreiten benötigt. Abhängig von diesen Bandbreiten erscheinen die sich bewegenden Bilder mehr oder weniger in einzelne Standbilder unterteilt.

Bisher war eine Video-Konferenz mit maximal zwei Teilnehmern bzw. zwei Teilnehmergruppen an zwei verschiedenen Netzpunkten des eines auf ISDN-Standard basierenden Kommunikationsnetzes möglich. Das Text-Chatten ist zwischen mehreren Teilnehmern bzw. Teilnehmergruppen, die ihre Endgeräte an verschiedenen Netzpunkten des Kommunikationsnetzes angeordnet haben, möglich.

Aufgabe der Erfindung ist es demzufolge, ein Verfahren zur Übertragung von Kommunikationsdaten dahingehend weiter zu entwickeln, dass eine Kommunikation per Videodaten zwischen mindestens zwei in einem gemeinsamen Kommunikationsnetz angeordneten Endgeräten auch im Internet/Intranet möglich ist.

Diese Aufgabe wird verfahrensseitig durch die Merkmale des Patentanspruches 1 und vorrichtungsseitig durch die Merkmale der Patentansprüche 13 und 15 gelöst.

Ein wesentlicher Punkt der Erfindung liegt darin, dass bei einem Verfahren zur Übertragung von Kommunikationsdaten zwischen mindestens drei in einem gemeinsamen Kommunikationsnetz in verschiedenen Netzpunkten angeordneten Endgeräten Bewegungsbilddaten und Audio-Daten zwischen den drei Endgeräten zur gleichzeitigen Kommunikation der Endgeräte in Echtzeit paketvermittelt übertragen werden. Auf diese Weise wird die Durchführung einer Video-Konferenz auch für mehr als zwei Teilnehmer möglich, wobei jeder Teilnehmer sich mit jedem anderen Teilnehmer in Echtzeit zur gleichen Zeit unterhalten kann.

Gemäß einer bevorzugten Ausführungsform werden die Videound/oder Audio-Daten von jedem an dem Video-Chatten bzw. der Video-Konferenz beteiligten Endgerät an einen gemeinsamen Server gesendet, der die Video- und/oder Audio-Daten bezüglich der sendenden Endgeräte getrennt sammelt und anschließend codiert, um sie an die weiteren empfangenden Endgeräte kontinuierlich zu übertragen. Eine derartige kontinuierliche Übertragung, auch Streaming genannt, erfolgt in Echtzeit, so dass während des Video-Chattens bzw. der Video-Konferenz jeder der Teilnehmer die anderen Teilnehmer live auf dem Bildschirm seines PCs betrachten kann. Die zum Abspielen der Streaming-daten erforderlichen sogenannten Player, wie sie von den Firmen Real Networks, Apple und Microsoft angeboten werden, müssen für die Durchführung des erfindungsgemäßen Verfahrens auf die zeitgleiche Darstellung von mehr als zwei Video-Streams freigeschaltet werden. Damit der Server in dem Kommunikationsnetz die verschiedenen Video-Daten einsammeln kann, ist auf den Endgeräten eine Software installiert, deren Funktion das Senden der lokalen Video-Daten zum Server in einer vereinbarten Form ist.

Die Audio-Daten können zunächst ohne Bewegungsbilddaten übertragen werden, um in der Phase des sich Kennenlernens eine anfänglich anonyme Kommunikation zu ermöglichen.

Gemäß einer weiteren bevorzugten Ausführungsform findet eine Codierung der Video-Daten bereits in den sendenden als PC, Palmtop, UNIX-Rechner oder Playstation ausgebildeten Endgerät oder in einer mit dem Endgerät verbundenen Kamera statt. Die Streaming-Daten werden dann zum Server gesendet, von diesem eingesammelt und getrennt an jedes empfangende weitere Endgerät als Streaming-Daten gesendet (gebroadcastet).

In einer weiteren Ausführungsform übernimmt jedes sendende Endgerät die Rolle des Streaming-Servers, d.h. das sendende Endgerät codiert die Video- und/oder Audio-Daten in Streaming-Daten, um diese anschließend an die weiteren empfangenden Endgeräte zu übertragen. Die sendenden Endgeräte benötigen hierfür hohe Upstream-Bandbreiten, da für jedes empfangende Endgerät getrennt Streaming-Daten ins Kommunikationsnetz gesendet werden müssen.

Aufgrund der gleichzeitigen Übertragung von Bewegungsbilddaten und Audio-Daten in Echtzeit kann jeder Teilnehmer, der ein Endgerät benutzt, das Live-Bild sämtlicher weiterer Teilnehmer auf dem Bildschirm seines PCs sehen. Dies kann beispielsweise durch das gleichzeitige Öffnen von vier Fenstern auf dem Bildschirm, in welchen die Bewegungsbilder der anderen Teilnehmer angezeigt werden, ermöglicht werden. Die Bewegungsbilder werden demzufolge nicht a priori gemischt. Auf diese Weise ist die Mimik und das Verhalten sämtlicher Teilnehmer zu einem bestimmten Zeitpunkt beobachtbar, ohne dass an dem PC weitere Funktionen betätigt werden müssen.

Gemäß einer Weiterbildung können ein oder mehrere Fenster für das gemeinsame Betrachten von Bewegungsbild-Objekten eingesetzt werden. Derartige Bewegungsbild-Objekte können Inhalte eines Video-Clips, einer Powerpoint-Präsentation, einer Webseite, einer Webcam in einer Urlaubsgegend oder im Operationssaal sowie ein Internet-Game oder eine Fernsehsendung sein. Dieses Fenster kann mit übertragenen Audio-Daten kombiniert werden, die simultan und/oder temporär zum Chat-Vorgang bzw. zur Video-Konferenz zugeschaltet werden.

Einem Teilnehmer, der ein die Video-Konferenz bzw. das Video-Chat einberufende Teilnehmer ist, kann mittels seines Endgerätes Moderationsrechte übertragen, wie beispielsweise die Selektion der Chat- bzw. Konferenzteilnehmer sowie der Chatoder Konferenzbeiträge. Des weiteren steuert der moderierende Teilnehmer den Inhalt von einem oder mehreren frei auswählbaren (Application-Sharing, z.B. über Whiteboard) Bewegungsbild-Fenster, der an sämtliche weitere PCs übertragen werden soll. Auf diese Weise ist eine Präsentation eines bestimmten Gegenstandes oder eine gemeinsam zu betrachtende Webpage darstellbar.

Die Endgeräte können über einen zentralangeordneten Server einen virtuellen Raum schaffen, in welchem die die Endgeräte nutzenden Teilnehmer sich scheinbar aufhalten und welcher als Hintergrundbild bei der Abbildung eines Teilnehmers auf dem Endgerät eines anderen Teilnehmers auftritt.

Ein Video-Konferenzsystem oder Video-Chatsystem zur Durchführung des Verfahrens weist vorteilhaft in jedem Endgerät eine Codiereinrichtung zur Konvertierung der Video- und Audio-Daten in an empfangende Endgeräte zu sendende Streaming-Daten und eine in jedem Endgerät angeordnete Abspiel-Einrichtung (Player) zum Abspielen von empfangenden Video- und/oder Audio-Daten auf, wobei die Video- und Audio-Daten in Echtzeit paketvermittelt übertragbar sind.

Weitere Ausführungsformen ergeben sich aus den Unteransprüchen. Vorteile und Zweckmäßigkeiten sind der nachfolgenden Beschreibung in Verbindung mit der Zeichnung zu entnehmen. Hierbei zeigen:
- Fig.1: eine vergleichende Darstellung verschiedener Typen von Kommunikationsverbindungen gemäß dem Stand der Technik und dem erfindungsgemäßen Verfahren,
- Fig.2: eine schematische Darstellung einer ersten Ausführungsform des erfindungsgemäßen Verfahrens,
- Fig.3: eine schematische Darstellung einer zweiten Ausführungsform des erfindungsgemäßen Verfahrens, und
- Fig.4: eine schematische Darstellung einer dritten Ausführungsform des erfindungsgemäßen Verfahrens.

Die in Fig. 1 gezeigte vergleichende Darstellung zwischen den bisher üblichen Typen von Kommunikationsverbindungen zum Übertragen von Video- und/oder Audio-Daten und der many-tomany Kommunikationsverbindung gemäß dem erfindungsgemäßen Verfahren verdeutlicht den erfinderischen Gedanken des Kommunizierens von Endgeräten, die in verschiedenen Netzpunkten eines gemeinsamen Kommunikationsnetzes angeordnet sind, wobei die Zahl der Endgeräte mindestens drei ist. In dem für die Übertragung von Video-Daten geeigneten erfindungsgemäßen many-to-many Verfahren D kann von jedem sendenden Endgerät aus eine Kommunikation zu jedem der verbleibenden sieben Endgeräte stattfinden. Wahlweise kann ein Teilnehmer, der ein sendendes Endgerät benutzt, einen Video-Chat-Beitrag bzw. Video-Konferenz-Beitrag temporär beispielsweise durch Drücken eines speziellen Knopfes gezielt an ausgewählte Endgeräte übertragen, um auf diese Weise mit den ausgewählten Endgeräten eine Privat-Kommunikation durchzuführen (Sub-Chat-Channel/Sub-Chat-Room, Sub-Konferenz-Channel/Sub-Chat-Room).

Zusätzliche Textdaten können als Chat-Text-Beitrag maschinell vom empfangenden Endgerät oder einem Server in Echtzeit in eine Fremdsprache, die vom Teilnehmer des empfangenden Endgerätes benutzt wird, übersetzt werden. Alternativ kann die Fremdsprache von dem das sendende Endgerät benutzenden Teilnehmer ausgewählt werden. Auf diese Weise können sämtliche an der Video-Konferenz bzw. dem Video-Chatten beteiligte Teilnehmer miteinander in Echtzeit kommunizieren, auch wenn sie verschiedene Sprache sprechen. Alternativ können auch Audiodaten von in dem Server oder den empfangenden Endgeräten angeordneten Übersetzungseinrichtungen in eine Fremdsprache übertragen werden, so dass die an dem Video-Chatten beteiligten Teilnehmer auch dann in Echtzeit miteinander sprechen können, wenn sie verschiedene Sprachen sprechen. Zusätzlich können am sendenden Endgerät gesprochene Sprachdaten mit Hilfe eines Sprachdatenerkenungsprogrammes in Textdaten umgewandelt werden. Ebenso können am empfangenden Endgerät eingegangene Textdaten als Sprachdaten ausgegeben werden.

An dem sendenden Endgerät, welches von einem moderierenden Teilnehmer bedient werden kann, lässt sich wahlweise ein Video-Bewegungsbild zuschalten, welches von einzelnen oder allen Endgeräten zur gemeinsamen Betrachtung empfangen wird. Einer anfänglichen Kommunikation mittels übertragener Textdaten kann dann das Hinzufügen eines Video-Bewegungsbildes durch zusätzliches Übertragen von Bewegungsbilddaten an die Teilnehmer, die die empfangenden Endgeräte benutzen, beispielsweise im Rahmen eines "Was/Wer bin ich"-Quiz, folgen.

Teilnehmer, deren Endgeräte bei Beginn des Video-Chat-Vorganges bzw. der Video-Konferenz noch nicht hinzugeschaltet waren, können zu einem späteren Zeitpunkt auf eigenen Wunsch hin in die Video-Konferenz bzw. den Video-Chat-Vorgang einsteigen und den bereits zwischen den Endgeräten ausgetauschten Text, der in einem Log-File abgespeichert worden ist, überfliegen, nach Inhalt durchsuchen und nach Personen/Teilnehmern sortieren lassen.

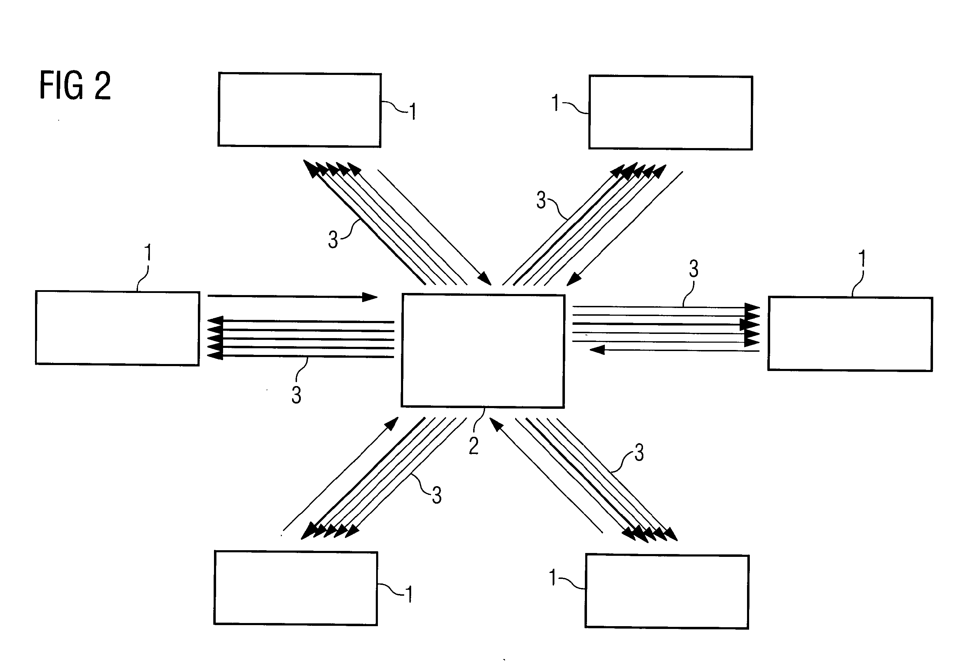

Fig. 2 zeigt in einer schematischen Darstellung eine erste Ausführungsform der Erfindung. Der Server 2 codiert die aufgrund der vorangegangenen Übertragung 3 empfangenen Videound/oder Audio-Daten getrennt in Streaming-Daten und sendet dies in getrennter Form an die jeweiligen von einem sendenden Endgerät ausgewählten empfangenden Endgeräte 1.

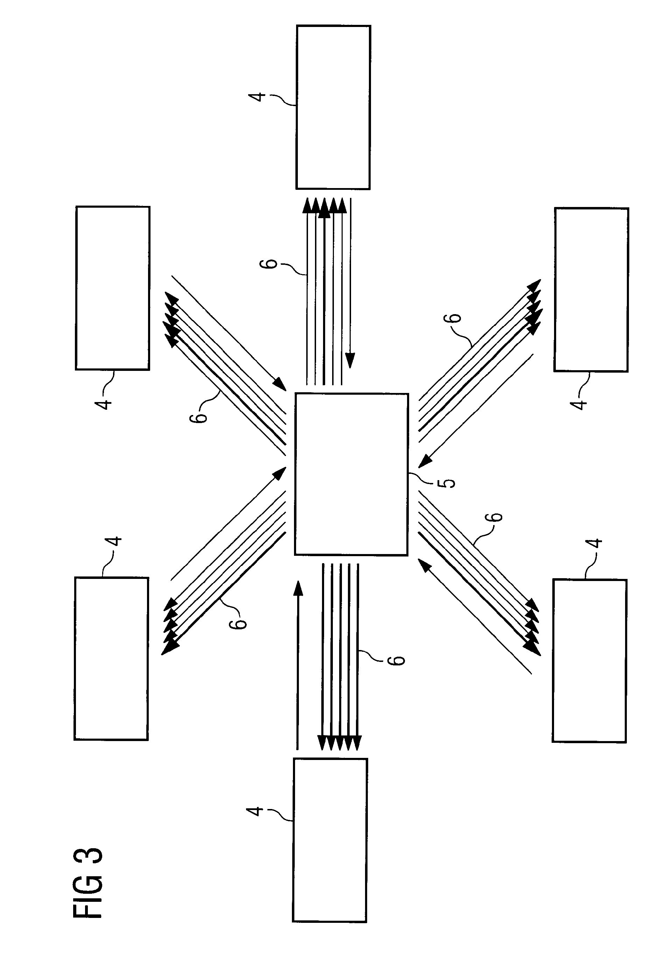

Fig. 3 stellt in einer schematischen Darstellung eine zweite Ausführungsform der Erfindung dar. Eine Codierung der Videound/oder Audio-Signale findet bei dieser Ausführungsform in den Endgeräten 4 statt, von denen jedes mit einem zentral angeordneten Server 5 verbunden ist. Nach Übertragung 6 der codierten Streaming-Daten sammelt der Server 6 die Streaming-Daten ein und sendet diese live an jedes empfangende weitere Endgerät 4.

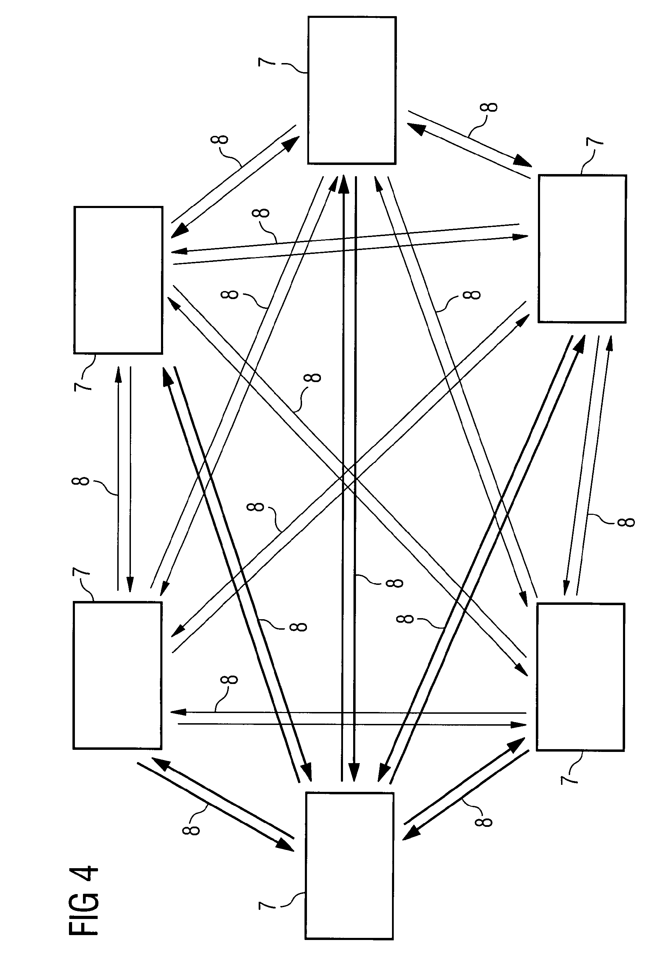

In der dritten Ausführungsform des erfindungsgemäßen Verfahrens gemäß Fig. 4 übernimmt jedes Endgerät 7 die Rolle eines Streaming-Servers, d.h. jedes sendende Endgerät 7 codiert die Video- und/oder Audio-Daten in Streaming-Daten und führt eine Übertragung 8 an jedes weitere empfangende Endgerät 7 durch.

Die Audio-Daten können entweder zusammen mit den Video-Daten in einem gemeinsamen Stream übertragen werden, oder zunächst auf eine Konferenz-Brücke geführt werden, um gemeinsam codiert und als separater Audio-Stream zu den einzelnen Endgeräten übertragen zu werden.

Die Übertragung von Video- und/oder Audio-Streams wird durch einen moderierenden Teilnehmer mittels einer Web-Applikation, die den Streaming-Server steuert, gesteuert.

Die Qualität der Video- und/oder Audiowiedergabe lässt sich von jedem Teilnehmer, der ein empfangendes Endgerät benutzt, individuell für jeden Stream auswählen/einstellen. Beispielsweise kann eine Bandbreite von 28 kbits oder 100 kbits für den Video-Daten-Stream verwendet werden. Somit hängt die Qualität der Audio- und/oder Video-Datenwiedergabe von der dem Endgerät zu Verfügung stehenden Bandbreite für den Zugang zum Intranet/Internet ab.

Die in Fig. 3 gezeigten Endgeräte beanspruchen jeweils eine Upstreambandbreite für zu sendende Video- und/oder Audio-Signale und eine Bandbreite für insgesamt 5 Downstreams der zu empfangenden Video- und/oder Audio-Signale. Ein Upstream benötigt beispielsweise eine Bandbreite von 28 kbits, wohingegen der Downstream eine Bandbreite von 5 mal 28 kbits (entspricht 140 kbits) beansprucht. Die in der dritten Ausführungsform gemäß der Fig. 4 gezeigten Endgeräte benötigen hingegen sowohl für den Upstream als auch den Downstream eine Bandbreite von jeweils 140 kbits.

Das erfindungsgemäße Verfahren ermöglicht die Durchführung einer Video-Konferenz bzw. eines Video-Chattens zwischen Teilnehmern, die taub und/oder stumm sind, da jedem Teilnehmer auf seinem Endgerät sowohl Video- als auch Audio-Daten zur Verfügung stehen.

## Patentansprüche

1. Verfahren zur Übertragung (3; 6; 8) von Kommunikationsdaten zwischen mindestens zwei in einem gemeinsamen Kommunikationsnetz in verschiedenen Netzpunkten angeordneten Endgeräten (1; 4; 7),
**dadurch gekennzeichnet, dass**
Bewegungsbilddaten zwischen den zwei Endgeräten (1; 4; 7) zur gleichzeitigen Kommunikation der Endgeräte (1; 4; 7) in Echtzeit paketvermittelt übertragen werden (3; 6; 8).

2. Verfahren nach Anspruch 1,
**dadurch gekennzeichnet, dass**
die Bewegungsbilddaten und/oder Audio-Daten von einem Endgerät (1) an einen für die Endgeräte (1) gemeinsamen Server (2) gesendet, mittels des Servers codiert und von dem Server (2) an die weiteren Endgeräte (1) kontinuierlich übertragen werden.

3. Verfahren nach Anspruch 1,
**dadurch gekennzeichnet, dass**
die Bewegungsbilddaten und/oder Audio-Daten von einem der Endgeräte (4) codiert, an einen gemeinsamen Server (5) gesendet und von dem Server (5) an die weiteren empfangenden Endgeräte (4) kontinuierlich übertragen werden.

4. Verfahren nach Anspruch 1,
**dadurch gekennzeichnet, dass**
die Bewegungsbilddaten und/oder Audio-Daten in einem der Endgeräte (7) codiert und von dem Endgerät (7) an die weiteren empfangenden Endgeräte (7) kontinuierlich übertragen werden (8).

5. Verfahren nach einem der Ansprüche 2-4,
**dadurch gekennzeichnet, dass**
die in den Ansprüchen 2-4 jeweils beschriebenen Verfahrensabläufe für jedes Endgerät (1; 4; 7) durchgeführt werden.

6. Verfahren nach einem der Ansprüche 2-5,
**dadurch gekennzeichnet, dass**
das sendende Endgerät (1; 4; 7) ein oder mehrere Endgerät(e) (1; 4; 7) zum Empfang der zu übertragenden Video- und/oder Audio-Daten auswählt.

7. Verfahren nach einem der vorangegangenen Ansprüche,
**dadurch gekennzeichnet, dass**
in getrennt voneinander angeordneten Bildfenstern einer Anzeigevorrichtung eines Endgerätes (1; 4; 7) die Bewegungsbilddaten von jeweils einem der weiteren Endgeräte (1; 4; 7) angezeigt werden.

8. Verfahren nach einem der Ansprüche 2-7,
**dadurch gekennzeichnet, dass**
die von einzelnen Endgeräten (1; 4; 7) gesendeten AudioDaten in Echtzeit vermischt werden.

9. Verfahren nach einem der vorangegangenen Ansprüche,
**dadurch gekennzeichnet, dass**
die Kommunikationsdaten Textdaten beinhalten.

10. Verfahren nach Anspruch 9,
**dadurch gekennzeichnet, dass**
die Textdaten nach ihrem Empfang in den Endgeräten in eine Fremdsprache übersetzt werden.

11. Verfahren nach einem der vorangegangenen Ansprüche,
**dadurch gekennzeichnet, dass**
die Kommunikationsdaten in einem auf Asynchronous-Transfer-Mode basierenden Kommunikationsnetz paketvermittelt übertragen werden.

12. Verfahren nach einem der Ansprüche 1-10,
**dadurch gekennzeichnet, dass**
die Kommunikationsdaten in einem auf Internet-Protokoll basierenden Kommunikationsnetz paketvermittelt übertragen werden.

13. Video-Konferenzsystem zur Durchführung des Verfahrens zur Übertragung von Kommunikationsdaten zwischen mindestens drei in einem Kommunikationsnetz in verschiedenen Netzpunkten angeordneten Endgeräten (1; 4; 7) nach einem der vorangegangenen Ansprüche,
**gekennzeichnet durch**
eine in jedem Endgerät (1; 4; 7) oder in einer dem Endgerät (1; 4; 7) zugeordneten Einrichtung angeordnete CodierEinrichtung zur Konvertierung von Video- und/oder Audio-Daten in an empfangende Endgeräte (1; 4; 7) zu sendende Streaming-Daten und
eine in jedem Endgerät (1; 4; 7) angeordnete Abspieleinrichtung zum Abspielen von empfangenden Video- und/oder Audio-Daten, wobei die Video- und/oder Audio-Daten in Echtzeit paketvermittelt übertragbar sind.

14. Video-Konferenzsystem nach Anspruch 13,
**dadurch gekennzeichnet, dass**
die Video-Daten und Audio-Daten nach Ihrer Konvertierung als Streaming-Daten in getrennten Streams übertragbar und in den empfangenden Endgeräten (1;4;7) mischbar sind.

15. Video-Chat-System zur Durchführung des Verfahrens zur Übertragung von Kommunikationsdaten zwischen mindestens zwei in einem Kommunikationsnetz in verschiedenen Netzpunkten angeordneten Endgeräten (1;4;7) nach einem der Ansprüche 1-12, **gekennzeichnet durch**
eine in jedem Endgerät (1;4;7) oder einer dem Endgerät (1;4;7) zugeordneten Einrichtung angeordnete CodierEinrichtung zur Konvertierung von Video- und/oder Audiound/oder Textdaten an empfangende Endgeräte (1;4;7) zu sendende Streaming-Daten und
eine in jedem Endgerät(1;4;7) angeordnete Abspieleinrichtung zum Abspielen von empfangenden Video- und/oder Audiodaten, wobei die Video- und/oder Audiodaten in Echtzeit paketvermittelt übertragbar sind.

16. Video-Chat-System nach Anspruch 15,
**dadurch gekennzeichnet, dass**
die Video-Daten und Audio-Daten nach Ihrer Konvertierung als Streaming-Daten in getrennten Streams übertragbar und in den empfangenden Endgeräten (1;4;7) mischbar sind.

17. Video-Chat-System nach Anspruch 15 oder 16,
**gekennzeichnet durch**
empfangseitig angeordnete Anzeige- und Ausgabeeinrichtungen zum simultanen Anzeigen bzw. Ausgeben in einen Raum von Video- und Audiodaten nach ihrer Konvertierung und Übertragung als Streaming-Daten in getrennten Streams.

18. Video-Chat-System nach einem der Ansprüche 15-17,
**gekennzeichnet durch**
eine in einem Server oder in den empfangenden Endgeräten (1, 4, 7) angeordneten Übersetzungseinrichtung zum Übersetzen von in einer ersten Sprache übertragenen Text- und/oder Audiodaten in in einer zweite Sprache abgefassten Daten.
